Europäisches Patentamt

(19) European Patent Office

Office européen des brevets

(11) Publication number: **0 194 364**
**A1**

(12) # EUROPEAN PATENT APPLICATION

(21) Application number: **85301635.0**

(22) Date of filing: **08.03.85**

(51) Int. Cl.⁴: **B 60 P 3/38**

(43) Date of publication of application:
**17.09.86 Bulletin 86/38**

(84) Designated Contracting States:
**AT BE CH DE FR GB IT LI LU NL SE**

(71) Applicant: **Straub, Robert Perrin**
**2802 Lawina Road**
**Baltimore Maryland 21216(US)**

(72) Inventor: **Straub, Robert Perrin**
**2802 Lawina Road**
**Baltimore Maryland 21216(US)**

(74) Representative: **Thomson, Paul Anthony et al,**
**Potts, Kerr & Co. 15, Hamilton Square**
**Birkenhead Merseyside L41 6BR(GB)**

(54) **Motor vehicle camping device.**

(57) A camping device (10) is especially adapted for various compact vehicles having a "hatchback" design. The device includes a platform and a flexible bag. The platform rests upon the vehicle floor, which may be formed by the fold-down rear seat. The platform has a portion which extends beyond the rear of the vehicle, thereby effectively increasing the vehicle length and accommodating adults for sleeping purposes. The flexible bag has an open end which easily fits over the platform and the raised hatchback rear door to provide an enclosed (and enlarged) interior within the car. An elastic band (23-27) (or other suitable sealing means) is provided on the flexible bag substantially near the open end thereof. When the bag is placed on the car, the elastic band is disposed forwardly of the hinge for the hatchback door, thereby effectively protecting the occupants against rain or inclement weather. The flexible bag may be formed by a plurality of sections joined by respective elastic bands. This allows the bag to be used with a variety of cars or other vehicles having different sizes or shapes.

FIG I.

EP 0 194 364 A1

MOTOR VEHICLE CAMPING DEVICE

## FIELD OF THE INVENTION

The present invention relates generally to devices adapted to enshroud a trailing portion of a motor vehicle, and more particularly, to a camping device that may be removably attached to the rear of a station wagon or other hatchback automobile, wherein the hatchback rear door is hinged to the roof along an axis transverse to the vehicle length, and wherein the door may be pivoted upwardly in a direction away from the rear bumper.

## BACKGROUND OF THE INVENTION

Camping is a very popular recreational activity. It has also become an economic necessity to persons making long journeys and not having adequate means to afford conventional and expensive, motel accommodations. Whereas full-sized station wagons may have at one time provided adequate space for two adults to rest, small vehicles having rear "hatchbacks" no longer afford adequate room to the traveler even though the rear seat is folded down. These hatchbacks are becoming increasingly more common, because of available savings in gasoline and lower maintenance costs.

The prior art devices for enlarging the interior of a vehicle are generally adapted for large size vehicles. They are usually cumbersome, unwieldly, expensive, and difficult to install or to remove. These devices are not readily adaptable to a compact car, such as the HONDA "Civic" hatchback station wagon.

## SUMMARY OF THE INVENTION

Accordingly, it is an object of the present invention to alleviate the disadvantages and deficiencies of the prior art by providing a novel camping device adapted to enshroud the trailing portion of a vehicle, and more particularly, a hatchback automobile.

It is another object of the present invention to provide a camping device which is very lightweight, convenient to store, durable in construction, and easy to install and to remove.

It is yet another object to provide a camping device which is economical to manufacture, thereby lending itself to mass production techniques for widespread marketing and distribution.

It is a further object to provide a camping device which can accommodate people of various and diverse dimensions without cramping, thereby allowing tall people and adults the means by which the effective bed length in the vehicle can be extended for their personal accommodation.

It is yet a further object to provide an improved ventilating means in the camping device.

It is a yet still further object to provide a camping device which will not mar the external surface of the vehicle, yet provides an improved sealing means against inclement weather.

It is, again, another object to provide a camping device which will not have any adverse impact on the ability of the vehicle to be driven when the device is installed on the vehicle, nor will it adversely affect the driver's visibility when the vehicle is being driven (except to the rear, which can be partially overcome using the vehicle's exterior rear view mirror).

In accordance with the teachings of the present invention, there is herein disclosed and claimed a preferred embodiment thereof, wherein the camping device is intended for use with a motor vehicle having a rear bumper and further having a hatchback rear door hinged to the vehicle roof along an axis transverse to the vehicle length, such that the door may be pivoted upwardly in a direction away from the rear bumper, thereby providing access to the interior of the vehicle and to the floor therein. The camping device is characterized by a platform means supported within the vehicle and extending rearwardly of the vehicle beyond the rear bumper for increasing the effective length of the floor. A flexible bag has an open end adapted to be slidably positioned over the raised hatchback rear door and over the platform means, thereby enclosing the rear of the vehicle and enlarging the usable space in the vehicle interior; and the bag has means substantially adjacent to the open end thereof for removably gripping the vehicle forwardly of the hinge for the hatchback door, thereby protecting the vehicle interior against inclement weather.

In accordance with the further teachings of the present invention, the platform means includes a substantially planar rigid platform adapted to rest upon the vehicle floor and to be cantilever supported thereon, and straps or other suitable means are provided to removably secure the platform to the folded-down seats within the vehicle. A mattress may be provided on top of the platform for user comfort. Additionally, the platform may be formed from a plurality of sections hinged together, so that the platform may be folded into a compact shape for convenient storage. When unfolded, a plurality of U-shaped clips removably span adjacent sections of the platform to assure that the platform will be rigid during use thereof.

In accordance with the still further teachings of the present invention, the means for removably gripping the vehicle includes an elastic band. This elastic band may comprise a first elastic band carried by the open end of the flexible bag. Preferably, however, a plurality of elastic bands are carried by the flexible bag, rearwardly of the first elastic band on the open end of the bag, and are spaced apart from one another. As a result, the flexible bag snugly grips the vehicle including the raised hatchback rear door and the rear bumper. Moreover, the flexible bag will readily accommodate vehicles of different sizes and shapes.

In accordance with the yet still further teachings of the present invention, the flexible bag includes a plurality of elastic bands. In the preferred embodiment, four sections are provided in the flexible bag, including a first section adjacent to the open end of the bag, second and third intermediate sections, and a fourth section adjacent to the rear of the bag, the rear of the bag being closed by a rear panel. When the bag is spread out, and viewed in side elevation apart when the vehicle, the first and fourth sections are substantially inverted wedge-shaped trapezoids, and the second and third intermediate sections are substantially parallelograms. The side of the fourth section may have a window formed therein, and the window may be provided with a protective flap. Preferably, reinforcing battens are carried in respective sleeves bridging the first and second sections of the flexible bag. These battens run substantially in the direction of the vehicle length, thereby precluding the tendency of the first section to curl away from the vehicle.

- 6 -

0194364

These and other objects of the present invention will become apparent from a reading of the following specification, taken in conjunction with the enclosed drawings.

BRIEF DESCRIPTION OF THE DRAWINGS

Fig. 1 is a side elevation of the camping device of the present invention removably installed on the rear portion of a typical "hatchback" vehicle.

Fig. 2 is a side elevation, corresponding substantially to Fig. 1, showing in broken lines the ability of the camping device of the present invention to accommodate vehicles having various and diverse contours of widely differing sizes, and further showing the platform means to readily accommodate adults of various sizes to rest fully within the vehicle interior as enclosed by the camping device of the present invention.

Fig. 3 is a view similar to Figs. 1 and 2, but showing the use of the device on a vehicle having a different style.

Fig. 4 is an end view of the camping device shown in Figs. 1, 2, and 3.

Fig. 5 is a partial perspective of a top portion of the device.

Fig. 6 is a detail side elevation of a window formed in the rearmost fourth section of the device.

Fig. 7 is perspective of the device, somewhat schematic, and showing the four sections or components of the device.

Fig. 8 is a perspective of the substantially-planar platform for increasing the length of the vehicle during use of the camping device.

Fig. 9 is a top plan view of the camping device of Figures 1-5.

Fig. 10 is a perspective of an alternate embodiment of the platform shown in Fig. 8, wherein the platform has several hinged sections or portions that are held in a rigid position by means of the plurality of U-shaped clips.

Fig. 11 showns the platform of Figure 10 in a folded stored position.

## DESCRIPTION OF THE PREFERRED EMBODIMENT

Referring to the drawings, the camping device 10 of the present invention is adapted to enshroud a trailing or rear portion of a vehicle, such as a "hatchback" automobile, and to readily accommodate a plurality of such vehicles having diverse rear sizes and shapes. As shown somewhat schematically in Fig. 7, the camping device 10 includes a flexible bag having a substantially rectangular top portion 1. This top portion 1 of the bag has longitudinal edges 11 and latitudinal edges 12. In a preferred embodiment, the edges 11 are approximately 15% longer than the edges 12. The top panel 1 is joined to side panels 2 which are of substantially trapezoidal configuration. The angle between the trailing edge 13 adjacent a back panel 3 is substantially orthogonal to the edges 11. The side panels 2 have a bottom edge 14 which is orthogonal to the trailing edge 13, so that trapezoidal side panels 2 are defined by a leading front edge 22 constituting the open end of the flexible bag. As shown in the drawings, the leading edge 22 of the side panel tapers from its higher portion adjacent the leading edge 12 of the top panel to its intersection with the bottom edge 14. In a preferred embodiment, the length of the edge 11 may be approximately 1/3 longer than the bottom edge 14.

A bottom panel 4 connects both side panels 2 along the bottom edge portion 14. The bottom panel 4 is substantially 10% larger (latitudinally) than the forward and trailing edges 12 of the top panel. Thus, the relationship of the leading edge 12 to the bottom edge 15 of the front portion allows (when viewed from a front planar view) a symmetrically formed trapezoid which defines a front opening 5 adapted to allow access from the interior portion of a vehicle to within the flexible bag of the camping device 10.

A rear panel 3 seals the top panel 1, the two side panels 2 and the bottom panel 4 to form the bag-like enclosure. The rear panel 3 is defined by the top trailing edge, the side rear edges 13, and a bottom edge 15. The bottom edge and the top edge are related in the same manner for the trailing portion and associated rear panel 3 as the front portion. However, it will be appreciated that the front opening is obliquely oriented relative to a vertical plane, while the rear panel 3 defines a vertical plane.

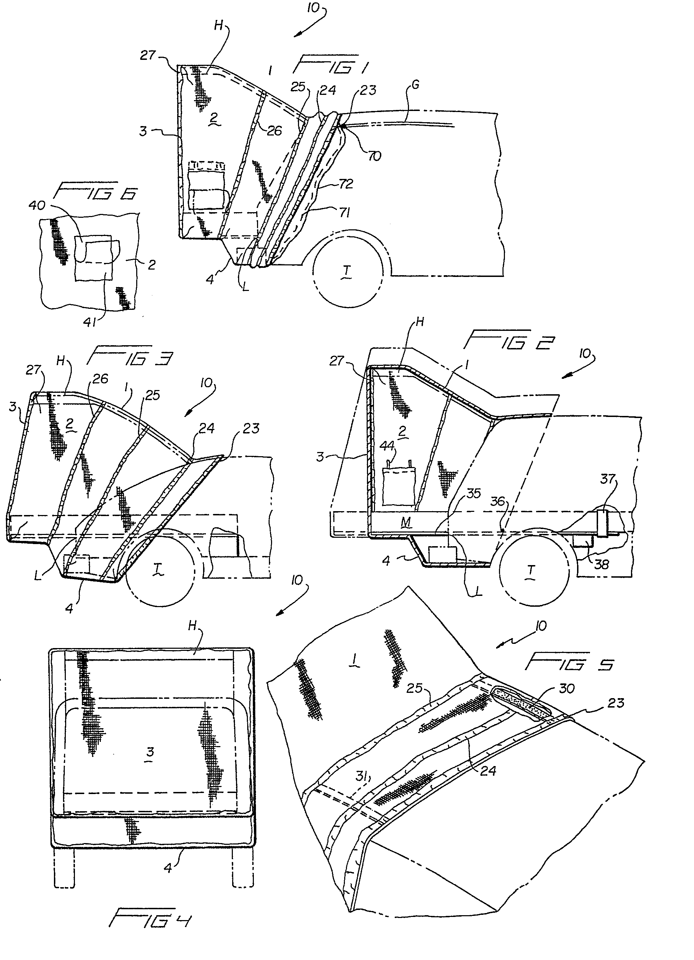

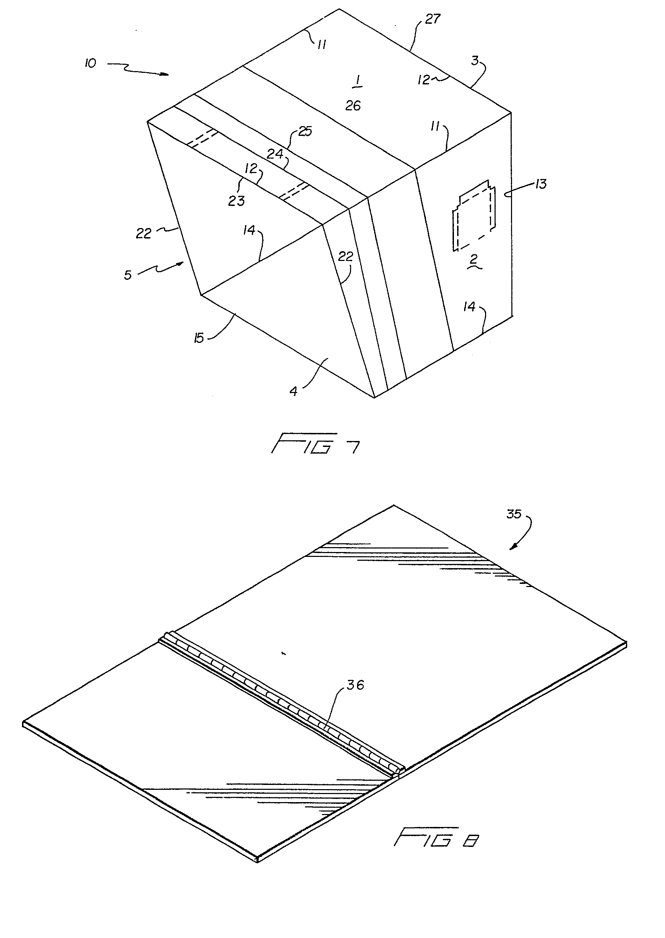

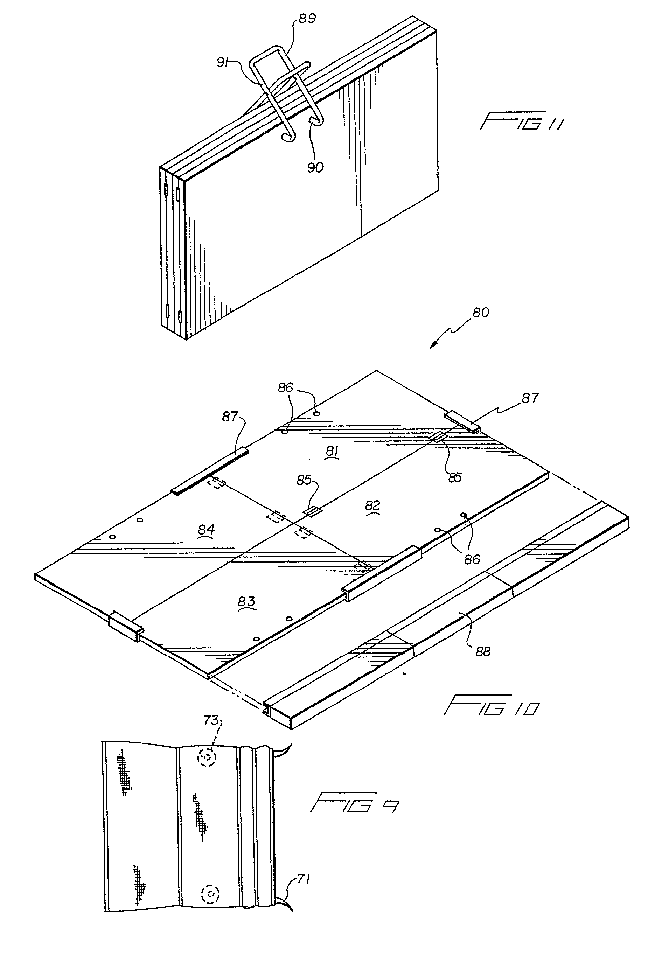

As will be appreciated, a blank can be formed initially of five planar pieces and sewn along the edges to define the bag-like enclosure. The seams are preferably lapped in such a manner that they are substantially impervious to moisture, as is well known in the art. The front open area 5 of the bag is defined by a peripheral edge 12, 15, 22, 22 which is provided with a first band of elastic material so as to assure a snug fitting engagement of the leading edge around a forwardmost body portion of the car, as shown more clearly in Fig. 5. Rearwardly of the elastic band 23 (at leading edge or open end of the flexible bag) are a second elastic band 24, a third elastic band 25, and a fourth elastic band 26. As a result, a plurality of tensioning areas are provided to provide a generically-oversized or "universal" flexible bag capable of accommodating a plurality of different dimensioned cars, as shown in Figs. 1-3 of the drawings. The trailing edge 12, 13 of the bag may also be provided with an elastic member or band 27 for similar purposes.

The material from which the bag is to be formed can be of any type common to the camping art, and a satisfactory choice of materials is one which is substantially impervious to the transmission of moisture. As shown in Figs. 1-3, respectively, the bottom panel may be deployed in one of a plurality of modes, so that the elastic members or bands 23-25 engage the rear bumper of a car, as is suitable and convenient, or alternatively may be brought forward on the underside of the car to engage the rear wheel well just rearwardly of the tire T. Thus, a plurality of cars, some having streamlined sweptback designs or some having substantially truncated trailing portions, can all be accommodated. Preferably, the bottom panel 4 is provided with a suitable temperature resistant material such as Nomex$^{TM}$. This material is used in many environments to withstand the high heat, such as those associated with exhaust gas temperatures commonly found along an exhaust pipe disposed proximate to the lower trailing portion of the vehicle.

With reference again to Fig. 7, the elastic bands 23-25 provide the desired sealing engagement between the flexible bag and the vehicle; and at least the first elastic band 23 is disposed on the vehicle substantially forwardly of the hinge for the hatchback rear door. The second elastic band 24, as it extends along the bottom panel, is twice as close to the leading edge 15 of the bottom panel as it is to the top associated leading edge 12. Likewise, the third elastic band 25 is equidistant from the second elastic band around the entire periphery, as is the fourth elastic band 27 from the third elastic band. Thus, a membrane is formed before the second elastic band and after the fourth elastic band, as defined by wedge-shaped segments.

A plurality of stays or battens 30 are carried along the top edge of the top panel 1 in integrally-formed pockets or sleeves 31 formed between the first and third elastic bands, as shown more clearly in Fig. 5. In this manner, the leading edge of the flexible bag will resist rolling up or "curling" due to air pressure. This may be important when strong winds are prevalent, or when the car is being driven with the camping device installed thereon.

With further reference to Figs. 1 and 9, the vehicle roof may be provided with gutters G which are adapted to channel the water from the roof top, rearwardly of the vehicle. Since this would tend to cause water to flow into the device 10, a dam in the form of putty 70 or a suitable impediment to the flow of the water may be included in the gutters. Thus, water tends to run over the gutters and away from migration into the device 10. In addition, the side panels of many vehicles have compound contours which are concave adjacent the side windows and rear fender walls. This may allow a gap within the elastic band. To this end, a flap 71 may be provided along the leading side edges of the vehicle, and the flap 71 may be provided with a magnetic material 72 along its leading border. The magnetic attraction causes the leading edge 71 to assume the shape of, or nest against, any compound contours which may exist in a vehicle. Therefore, any water which may drain into the camping device will be minimal. Nevertheless, drainage holes 73 are provided near the lowermost panel of the camping device, as shown in phantom in Figure 9, thereby providing for drainage of unwanted water out of the camping device.

A platform 35 extends the effective length of the vehicle bed or floor. More specifically, a sheet or platform of substantially-planar rigid material is disposed within the vehicle. As shown in Fig. 8, the platform may be provided with a hinge 36. This hinge allows the platform 35 to be folded. In its folded position, a portion of the platform 35 extends beyond the rear lip L of the vehicle, as shown in Figs. 1-3, and the major portion of the platform 35 is cantilevered and supported by the floor of the vehicle. The floor may be formed by the folded-down rear seat of the vehicle. A mattress M may be disposed upon the platform for greater comfort. Additionally, a tie-down strap 37 may be provided on a forward portion of the platform 35 so as to secure the platform to an integral portion of the vehicle interior, such as the fold-down rear seats commonly found in most compact cars, or to the existing seatbelts. Thus, by utilization of the strap and/or by taking advantage purely of the weight balance by the cantilevered arrangement, the obtrusive effect of the upstanding lip in the vehicle bed can be negated by the use of the platform, thereby assuring comfort during sleeping. Additionally, a spacer means such as a block 38 can be disposed on a bottom forward portion of the platform 35 to achieve a substantially-horizontal orientation of the platform. In lieu of the block 38, any suitable vertical adjusting means may be employed, if desired.

An alternative embodiment of the platform 35 is shown in Figs. 10 and 11. There, the platform 80 is formed from four segments 81-84. Segments 81 and 82 are joined by hinges 85 along their longitudinal extent, and segments 83 and 84 are hinged to segments 82 and 81, respectively, by similar hinges carried on the opposite surface of the planar, rectangular platform. As shown in Figure 10, four U-shaped clips 87 overlie edges of the platform segments transversely of the fold lines, thereby maintaining the rigidity of the platform 80. Other suitable means are equally feasible, consonant with the teachings of the present invention. Additionally, a clip may be disposed along one longitudinal edge of the platform 80 to increase the effective width thereof, should the car have a greater width than the size intended by the platform 80. A plurality of holes 86 are disposed on longitudinal outermost edges of each segment of the platform, so that when the device is in its folded position (as shown in Figure 11) a scissors-type handle formed from two U-shaped members 89 having inwardly directed tines 90 is adapted to be received in the holes 86 to facilitate carrying. As shown in Figure 11, two such U-shaped handles 89 are provided and are allowed to articulate one relative to the other by means of first and second pivot pins 91 joined substantially medially down the length of the U-shaped handle.  The handle may be gripped along a portion thereof.  The platform may be folded by rotating bight segments 81 and 82 (down into the plane of the paper in Figure 10) and abutting against segments 84 and 83; and thereafter folding along hinges 85, as shown in the drawing figures.

The flexible bag of the camping device 10, as shown for example in Fig. 3, may include first, second, third and fourth sections (viewed rearwardly of the vehicle) as defined by the respective elastic bands 23-27.  The fourth section of the bag, between the elastic bands 26 and 27, may be provided with a flap 40 covering an opening or window 41.  The window may have a mesh or screen, if desired, to repel insects.

As shown in the drawings, the bag is provided with sufficient slack so that various types of hatchbacks H can be accommodated.  Thus, a single bag may securely and reliably engage the lower trailing portions of respective vehicles (as by its proximate engagement with a bumper trailing the vehicle, or the associated wheelwell adjacent to the tire T).

Moreover, the flexible bag will not mar the vehicle, yet may be rapidly installed (and subsequently removed) without altering the weight-balance ratio of the vehicle or in any other way inhibiting the primary function of the vehicle. The flexible bag of the camping device of the present invention may be installed in roughly 20 seconds and removed in roughly 5 seconds.

In one embodiment of the present invention, the camping device disclosed herein has been adapted for a 1973-79 HONDA "Civic" station wagon of the hatchback design (for example). The camping device may be entered from one of the side doors. The enlarged, enclosed interior space will provide approximately two (2) meters of usable length, uninterrupted, for the convenience of at least two adults. Additionally, ample head room may be provided, depending upon the architecture of the particular vehicle.

Obviously, many modifications may be made without departing from the basic spirit of the present invention. Moreover, the invention may be adapted readily to a wide variety of vehicles. Accordingly, within the scope of the appended claims, the invention may be practiced other than specifically disclosed herein.

- 16 -

0194364

WHAT IS CLAIMED IS:

1. A camping device for a motor vehicle, wherein the vehicle has a rear bumper and further has a hatchback rear door hinged to the vehicle roof along an axis substantially transverse to the vehicle length, and wherein the door may be pivoted upwardly in a direction away from the rear bumper, thereby providing access to the interior of the vehicle, characterized by a platform means supported within the vehicle and extending rearwardly of the vehicle beyond the rear bumper for increasing the effective length of the floor, a flexible bag having an open end adapted to be slidably positioned over the raised hatchback rear door and over the platform means, thereby enclosing the rear of the vehicle and enlarging the usable space in the vehicle interior, and the bag having means substantially adjacent to the open end thereof for removably gripping the vehicle forwardly of the hinge for the hatchback door, thereby protecting the vehicle interior against inclement weather.

2. The camping device of claim 1, wherein the platform means includes a substantially planar rigid platform adapted to rest upon the vehicle floor and to be cantilever supported thereon.

3. The camping device of claim 2, further including means to removably secure the platform to the vehicle.

4. The camping device of claim 2, further including a mattress supported on the platform.

5. The camping device of claim 2, wherein the platform includes a plurality of sections hinged together, whereby the platform may be folded for convenient storage.

6. The camping device of claim 5, further including a plurality of U-shaped clips to span adjacent sections of the platform to assure that the platform will be rigid during use thereof.

7. The camping device of claim 2, further including means to adjust the platform to a substantially horizontal orientation.

8. The camping device of claim 1, wherein the means for removably gripping the vehicle comprises an elastic band.

9. The camping device of claim 8, wherein the elastic band comprises a first elastic band carried by the open end of the flexible bag, and wherein a plurality of elastic bands are carried by flexible bag rearwardly of the open end of the bag and spaced apart from one another, whereby the flexible bag snugly grips the vehicle including the raised hatchback rear door and the rear bumper.

10. The camping device of claim 9, wherein the flexible bag includes a plurality of sections separated by the respective plurality of elastic bands.

11. The camping device of claim 10, wherein the plurality of sections comprises four sections in the flexible bag, including a first section adjacent the open end, second and third intermediate sections, and a fourth section adjacent to the rear of the bag.

12. The camping device of claim 11 wherein the fourth section of the bag is closed by a rear panel.

13. The camping device of claim 12, wherein when the bag is spread out, and viewed in side elevation apart from the vehicle, the first and fourth sections are substantially inverted wedge-shaped trapezoids, and wherein the second and third sections are parallelograms.

14. The camping device of claim 11, further including a window formed in one of the sides of the fourth section of the flexible bag.

15. The camping device of claim 14, further including a protective flap for the window.

16. The camping device of claim 11, further including reinforcing battens carried by the bag, bridging the first and second sections, and running substantially in the direction of the length of the vehicle, thereby precluding the tendency of the first section to curl away from the vehicle.

17. The camping device of claim 16, wherein the battens are received in respective sleeves formed in the bag.

18. The camping device of claim 1, wherein the means for removably gripping the vehicle further includes a magnetic strip carried by the open end of the flexible bag.

FIG 1

FIG 6

FIG 3

FIG 2

FIG 4

FIG 5

FIG 7

FIG 8

FIG 11

FIG 10

FIG 9

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-1 458 352 (MENNING) <br> * page 1, lines 69-84; page 2, lines 25-42; figures 1-4 * | 1 | B 60 P 3/38 |
| A | | 2,4,7 | |
| Y | AUTOCAR, June 1977, pages 49, 50, London, GB; "Hatchback home" | 1 | |
| A | US-A-3 410 598 (DAVIS et al.) <br><br> * figures 1, 2, 4, 6 * | 3,5-7, 14,15 | |
| A | FR-A-2 409 883 (SAPEY-TRIOMPHE) | | |
| A | US-A-4 223 939 (BEGGS) | | TECHNICAL FIELDS SEARCHED (Int. Cl.4) <br><br> B 60 P 3/00 |
| L | US-A-4 504 049 (STRAUB) | | |

The present search report has been drawn up for all claims

| Place of search | Date of completion of the search | Examiner |
|---|---|---|
| BERLIN | 24-10-1985 | LUDWIG H J |